# EUROPÄISCHE PATENTSCHRIFT

(11) **EP 2 510 991 B1**
(45) Veröffentlichungstag und Bekanntmachung des Hinweises auf die Patenterteilung: **05.10.2016**
(21) Anmeldenummer: 11162038.1
(22) Anmeldetag: 12.04.2011
(51) Int. Cl.: B01B 1/00, B01D 1/00, G01N 31/00

(54) **Verfahren und Vorrichtung zur Destillation**
Method and device for distillation
Procédé et dispositif de distillation

(43) Veröffentlichungstag der Anmeldung: 17.10.2012
(73) Patentinhaber: Büchi Labortechnik AG, 9230 Flawil (CH)
(72) Erfinder: Haigis, Jürgen, 9244, Niederuzwil (CH)
(74) Vertreter: Hepp Wenger Ryffel AG

(56) Entgegenhaltungen:
- DE-A1- 2 534 773
- US-A- 3 964 869
- US-A- 4 081 345

## Beschreibung

Die Erfindung betrifft ein Verfahren und eine Vorrichtung zur Destillation, insbesondere eine Wasserdampfdestillation, mit den Merkmalen des Oberbegriffs der unabhängigen Patentansprüche. Der Benutzer weiss bei solchen Destillationsverfahren oft nicht, wie weit die Destillation bereits fortgeschritten ist. Insbesondere ist es für den Benutzer daher oft auch schwierig, die restliche benötigte Zeit bis zum Abschluss der Destillation abzuschätzen.

Gerade in der Industrie besteht Bedarf an möglichst weitgehend automatisierten Destillationsgeräten mit reduzierten Arbeitsschritten. Die präzise und für verschiedene Proben identische Voreinstellung einer Destillationszeit bedingt die exakte Bestimmung des Beginnes eines Produkttransfers bei einer Destillation. Der Beginn des Produkttransfers in ein Auffanggefäss muss deshalb als Beginn der Destillationszeit betrachtet werden, da die Dauer beziehungsweise Aufheizphase bis zum Zeitpunkt des Produkttransfers unterschiedlich sein kann. Beispielsweise unterscheidet sich erwähnte Aufheizphase für die erste Inbetriebnahme eines ausgekühlten Destillationsgeräts von derjenigen nach mehreren Analysen.

Bei bekannten automatischen Destillationsvorrichtungen wird angenommen, dass die Destillation ca. 4 min ab Beginn beendigt ist. Es ist dabei denkbar, dass in der Realität die Destination viel früher abgeschlossen wurde. Dadurch geht Zeit verloren.

Bei einer bekannten Versuchsanordnung für Destillationen wird durch ein Temperaturmessgerät am Destillationskopf anhand der Änderung der Temperatur der Beginn des Produkttransfers eines Destillats eruiert. Eine solche bekannte Vorrichtung wird im Buch "Organikum" (Organikum, WILEY-VCH, 21. Auflage, Seite 42 ff.) gezeigt. Der Zeitpunkt des Austritts beziehungsweise das Verdampfen der zu ermittelnden Substanz aus einer Probe ermittelt anhand der Temperatur hat den Nachteil - nebst der Tatsache, dass zusätzlich ein Temperaturmessgerät an die Versuchanordnung angebracht werden muss -, dass auch äussere Einflüsse einen Temperaturanstieg bedingen können. Im Weiteren ist eine solche Versuchsanordnung konstruktiv anspruchsvoll und vergleichsweise kostspielig. Zudem bergen zusätzliche Messsensoren das Risiko von Produktverschleppungen beispielsweise beim Wechsel zwischen verschiedenen Proben.

Weitere Vorrichtungen und Destillationsverfahren für die Analyse des Sickstoffgehalts in Substanzen sind bspw. in DE 25 34 773, US 4,081,345 und US 3,964,869 beschrieben.

Es ist deshalb eine Aufgabe der vorliegenden Erfindung, die Nachteile des Bekannten zu vermeiden und insbesondere ein Verfahren sowie eine Vorrichtung zur Destillation, insbesondere Wasserdampfdestillation, bereitzustellen, die auf einfache Art und Weise dem Benutzer Informationen über den bisherigen Verlauf und Status der Destillation gibt und insbesondere möglichst präzise den Zeitpunkt des Beginnes des Produkttransfers eines Destillats in ein Auffanggefäss ermitteln kann.

Erfindungsgemäss werden diese Aufgaben mit einem Verfahren und einer Vorrichtung mit den Merkmalen der unabhängigen Patentansprüche gelöst. Im Auffanggefäss für das Destillat der Destillationsanordnung ist eine Messvorrichtung angeordnet, welche den pH-Wert der im Auffanggefäss enthaltenen Flüssigkeit registriert und speichert.

Zur Durchführung der nachfolgenden Titration sind in Auffanggefässen typischerweise bereits Sensoren insbesondere zur pH-Messung enthalten. Indem der pH-Wert der Flüssigkeit nicht nur gemessen, sondern auch deren zeitlicher Verlauf gespeichert wird, können Rückschlüsse über den Verlauf der Destillation gewonnen werden, ohne dass aufwändige zusätzliche Messanordnungen vorgesehen werden müssen. Insbesondere erlaubt die Beobachtung des zeitlichen Verlaufs des pH-Werts auch die Bestimmung des Beginns der Destillation.

Um den zeitlichen Verlauf des pH-Werts für den Anwender des erfindungsgemässen Verfahrens möglichst praktikabel zu gestalten, wird dieser Verlauf bevorzugt grafisch dargestellt.

Es hat sich gezeigt, dass der Beginn der Produkttransfers eines Destillats in einer Auffangflüssigkeit eines Auffanggefässes bestimmt werden kann, indem der zeitliche Verlauf des pH-Werts beobachtet wird. Änderungen des pH-Werts erlauben einen Rückschluss auf den Beginn des Produkttransfers.

Wird der pH-Wert der Auffangflüssigkeit in Abhängigkeit der Zeit erfasst, so kann mit einer geeigneten Berechnungsmethode der Beginn des Produkttransfers des Destillats in die Auffangflüssigkeit auch rechnerisch bestimmt werden.

Die Messwerte des pH-Werts zu einzelnen Zeitpunkten und diese Zeitpunkte werden zu diesem Zweck abgespeichert. Die Speicherung kann in einem flüchtigen Speicher (typischerweise in dem Arbeitsspeicher eines Rechners des Destillationsgeräts) gespeichert werden. Es ist auch denkbar, die Messwerte permanent zu speichern oder zwecks permanenter Speicherung aus dem flüchtigen Speicher zu exportieren. Es ist ausserdem ebenfalls denkbar, den rechnerisch bestimmten Zeitpunkt des Destillationsbeginns bzw. des Produkttransfers in einem Speicher flüchtig oder dauerhaft zu speichern.

Die gemessene Eigenschaft ist der pH-Wert. Es hat sich als geeignet herausgestellt und wird auch bevorzugt, dass der Beginn des Produkttransfers des Destillats in einem Auffanggefäss aufgrund der Änderung des pH-Wertes in Abhängigkeit der Zeit ermittelt wird.

Bevorzugt wird der Verlauf des pH-Werts als Kurve in Abhängigkeit der Zeit seit Beginn der Destillation dargestellt. Insbesondere können bei einer bevorzugten Berechnungsmethode Datenpunkte ermittelt werden, wobei sich ein Datenpunkt aus einem bestimmten pH-Wert zu einem bestimmten Analysezeitpunkt ergibt. Der Verlauf der Datenpunkte wird erfasst und die Steigungswerte zwischen den Datenpunkten berechnet. Ein vorgängig festgelegter Steigungswert bestimmt einen Schwellenwert, welcher den Beginn des Produkttransfers des Destillats in einem Auffanggefäss indiziert.

Der Verlauf der Datenpunkte kann auch grafisch erfasst und dargestellt werden. Auf diese Weise kann der Benutzer einfach durch Beobachtung der dargestellten Grafik den Beginn des Produkttransfers ermitteln. Bevorzugt ist jedoch die rechnerische Bestimmung eines Knickpunktes, der den Beginn der Änderung der Eigenschaft zeigt. Bevorzugt über eine lineare Regression einer bestimmten Anzahl von Messpunkten wird der Steigungswert ermittelt. Typischerweise wird eine lineare Regression über ca. 5 bis 20 Messpunkte vorgenommen. Je nach Art der Destillation kann die Anzahl Messpunkte angepasst werden. Typischerweise werden bei Destillationen für Blindwertmessungen mehr Messpunkte benötigt als bei realen Proben. Die lineare Regression wird für die vorbestimmte Anzahl Messpunkte gleitend vorgenommen.

Bei einer potentiometrischen Titration wird eine Elektrode, insbesondere eine pH-Elektrode, in eine Auffangflüssigkeit getaucht, weshalb sich das erfindungsgemässe Verfahren für eine solche Anwendung besonders gut eignet.

Alternativ kann der zeitliche Verlauf in einem colorimetrischen Verfahren überwacht werden, indem die Transmission und/oder Farbänderung eines Indikators oder Indikatorgemisches verfolgt wird. Der Indikator wird vor Analysenbeginn, insbesondere vor Inbetriebnahme des Gerätes zur Wasserdampfdestillation, in eine Auffangflüssigkeit gegeben. Aufgrund der Verdünnung der Auffangflüssigkeit in Gegenwart des Destillats im Auffanggefäss und/oder der Farbänderung der mit Indikator versetzten Auffangflüssigkeit aufgrund der Änderung des pH Wertes in Abhängigkeit der Zeit kann der Beginn des Produkttransfers des Destillats ins Auffanggefäss ermittelt werden.

Bei einer potentiometrischen Messung wird die pH-Änderung aufgrund der Verdünnung der Auffangflüssigkeit durch das Destillat laufend gemessen. Bei einer colorimetrischen Messung sind zwei Effekte überlagert: Einerseits nimmt die Transmission aufgrund der Verdünnung zu. Gleichzeitig ändert sich im Umschlagpunkt des Indikators die Transmission aufgrund des Farbwechsels zusätzlich. Zur colorimetrischen Messung werden typischerweise colorimetrische Sonden verwendet, welche beispielsweise die Transmission bei einer Wellenlänge von 510 oder von 623 Nanometern messen.

Nach einer bevorzugten Berechnungsmethode werden Datenpunkte ermittelt, wobei sich ein Datenpunkt aus einer gemessenen Transmission von Messlicht bei einer Wellenlänge bei einem bestimmten Analysezeitpunkt ergibt. Der Verlauf der Datenpunkte wird vorzugsweise grafisch erfasst und die Steigungswerte zwischen den Datenpunkten berechnet. Ein vorgängig festgelegter Steigungswert bestimmt einen Schwellenwert, welcher den Beginn des Produkttransfers des Destillats in einem Auffanggefäss indiziert.

Gemäss einem weiteren bevorzugten Ausführungsbeispiel kann die Ermittlung der Steigungswerte zwischen den Datenpunkten je nach einem gewählten Betriebsmodus unterschiedlich erfolgen: So hat es sich insbesondere gezeigt, dass bei Blindwertmessungen eine grössere Anzahl von Datenpunkten und kleinere Schwellenwerte erforderlich ist. Bei der Messung von realen Proben ist die Änderung der Steigung des pH-Werts aufgrund des Produkttransfers grösser, sodass eine geringere Anzahl von Messpunkten ausreicht.

Beim Messen von Blindwerten erfolgt die Änderung der Eigenschaft der Auffangflüssigkeit allein aufgrund der Verdünnung und nicht aufgrund von Reaktion der Auffangflüssigkeit mit dem transferierten Produkt. Es sind daher insbesondere bei der Blindwertmessung mehr Datenpunkte erforderlich.

Die erfindungsgemässe Vorrichtung ist daher ausserdem bevorzugt in wenigstens zwei Betriebsmodi betreibbar. Je nach Betriebsmodus kann die Bestimmung der Steigung anders erfolgen. Betriebsmodi sind typischerweise Blindwertmessung, Probenmessung, Kontrollblindwertmessung und Referenzprobenmessung. Die Parameter zur Ermittlung der Steigung in der Blindwert- und der Kontrollblindwertmessung einerseits und bei der Proben- und Referenzprobenmessung andererseits werden jeweils gleich gewählt. Durch Auswahl des entsprechenden Betriebsmodus wird automatisch die geeignete Bestimmungsmethode, insbesondere die Anzahl Messpunkte und die Schwellenwerte der Steigung ausgewählt.

Die Kenntnis vom Beginn des Produkttransfers des Destillats erlaubt es dem Anwender, über mehrere Messproben mit reproduzierbaren Destillationszeiten zu arbeiten. Bevorzugt wird eine Destillationszeit dabei vordefiniert. Dies ermöglicht es dem Anwender, die Destillationsanordnung nicht ständig überwachen zu müssen und sich anderen Tätigkeiten im Labor widmen zu können. Bevorzugt wird ausserdem die Titration nach einer vorbestimmten Zeitspanne nach Detektion des Beginns der Destillation bzw. des Beginns des Produkttransfers automatisch gestartet. Insbesondere wird bevorzugt die Destillation während einer vorbestimmten Dauer ab dem rechnerisch ermittelten Beginn des Produktstransfers durchgeführt. Der Anwender erhält nach der vordefinierten Destillationszeit reproduzierbare Ergebnisse unabhängig vom Gerätezustand, insbesondere unabhängig davon, ob die Destillationsanordnung längere Zeit unbenutzt und ausgekühlt ist oder nicht.

Ein weiterer Aspekt der Erfindung bezieht sich auf eine Vorrichtung zur Durchführung des erfindungsgemässen Verfahrens. Die Vorrichtung weist mindestens ein Probengefäss, eine Kondensationsvorrichtung und mindestens ein Auffanggefäss für ein Destillat auf. Die Vorrichtung weist eine in der Auffangflüssigkeit des Auffanggefässes angeordnete Messvorrichtung auf, mit welcher der zeitliche Verlauf des pH-Werts einer im Auffanggefäss enthaltenen Flüssigkeit ermittelt und gespeichert werden kann.

Bevorzugt ist diese Messvorrichtung eine Elektrode, insbesondere eine pH-Elektrode, welche in eine Auffangflüssigkeit eingetaucht ist. Eine Elektrode registriert eine Änderung der Konzentration geladener Teilchen besonders sensitiv und ist ein besonders guter Indikator für den Eintritt eines Destillats ins Auffanggefäss, wenn die Änderung des pH-Wertes der Auffangflüssigkeit in Abhängigkeit der Zeit betrachtet wird.

Um den Verlauf des pH-Wertes verfolgen zu können, weist die Destillationsanordnung bevorzugt ein Ausgabegerät, insbesondere einen Bildschirm, auf, welches den Verlauf des pH-Werts im Auffanggefäss darstellt.

Anhand eines Ausgabegeräts kann die Änderung des pH-Werts von Auge verfolgt werden. Bevorzugt weist die Destillationsanordnung jedoch zusätzliche Mittel auf, um den Beginn des Produkttransfers ins Auffanggefäss rechnerisch zu bestimmen.

Im Weiteren ist die Destillationsanordnung bevorzugt mit einer Steuerung versehen, welche es ermöglicht, die Destillation ausgehend von ermittelten Anfangszeitpunkt nach einer vordefinierbaren Destillationszeit vom berechneten Anfangszeitpunkt abzubrechen.

Eine bevorzugte Ausführungsform zur Durchführung des erfindungsgemässen Verfahrens wird anhand der Bestimmungsmethode des Proteingehaltes z.B. in Lebensmitteln nach Kjeldahl erläutert.
Figur 1 zeigt eine Vorrichtung zur Durchführung des erfindungsgemässen Verfahrens.
Figur 2 zeigt eine grafische Darstellung der Änderung des pH-Wertes über die Zeit zur Ermittlung des Zeitpunkts des Produkttransfers.
Figur 3 zeigt ein Fliessschema zur rechnerischen Ermittlung des Beginns des Produkttransfers des Destillats.
Figur 4 zeigt die Darstellung von pH-Werten bei Drei Messproben bei unterschiedlich warmen Geräten.
Figur 5 zeigt die Darstellung von pH-Werten einer Blindprobe bei einem kalten und einem warmen Gerät.
Figur 6 zeigt das Messsignal eines Sensors bei Transmissionsmessung einer Messprobe.

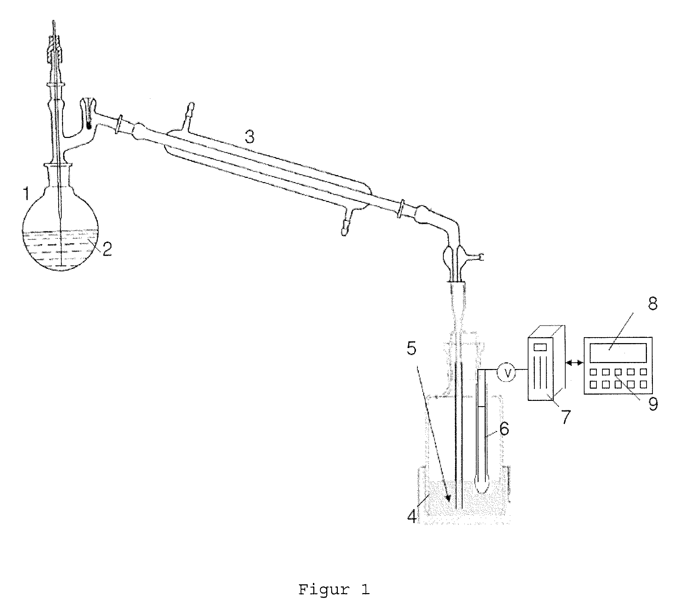

Figur 1 zeigt ein Probengefäss 1, welches eine Probe 2 enthält. Im Weiteren zeigt Figur 1 eine Kondensationsvorrichtung 3. Figur 1 zeigt zudem, wie das Destillat nach Abkühlung in eine Auffangflüssigkeit 5 in einem Auffanggefäss 4 geleitet wird. Eine pH-Elektrode 6 ist in die Auffangflüssigkeit 5 eingetaucht. Die Elektrode ist mit einem Rechner 7 zur Ermittlung und Speicherung des zeitabhängigen pH-Verlaufs sowie mit einem Ausgabegerät 8 verbunden. Zudem zeigt Figur 1 eine Steuerung 9.

Bei der Durchführung einer Destillation wird das Probengefäss 1 mit der Probe 2 erhitzt. Es dauert eine gewisse Zeit, bis die Probe 2 verdampft und an der Kondensationsvorrichtung 3 wieder kondensiert und schliesslich in das Auffanggefäss 4 geleitet wird. Während dieser Zeit bleibt der mit der pH-Elektrode 6 gemessene pH-Wert der Auffangflüssigkeit 5 etwa konstant. Die Auffangflüssigkeit ist üblicherweise bei einer Proteingehaltsbestimmung nach Kjeldahl eine verdünnte 1- bis 4%ige Borsäure. In dem Moment, wo das Kondensat von der Kondensationsvorrichtung 3 in das Auffanggefäss 4 gelangt, ändert sich der mit der Elektrode 6 gemessene pH-Wert. Dieser Zeitpunkt äussert sich in einem Knick des zeitlichen Verlaufs des gemessenen pH-Werts. Auf dem Ausgabegerät 8 kann der zeitabhängige Verlauf des pH-Werts ausserdem dargestellt werden. Die Beobachtung der Veränderung des pH-Werts gibt dem Benutzer weitere Informationen über den Stand der Destillation.

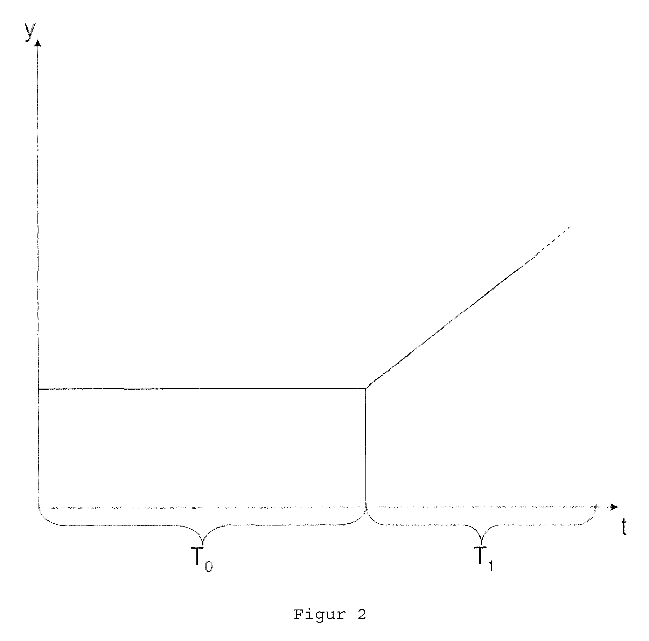

Figur 2 zeigt grafische Darstellung der Zeit (t) zum pH-Wert (y). Als T₀ wird die Aufheizphase aufgezeigt, in der kein Produkttransfer erfolgt. T₁ zeigt den Produkttransfer. Während T₁ ändert sich der pH-Wert in Abhängigkeit der Zeit. Der Knickpunkt zwischen T₀ und T₁ drückt den Beginn des Produkttransfers des Destillats in die Auffangflüssigkeit 5 des Auffanggefässes 4 aus.

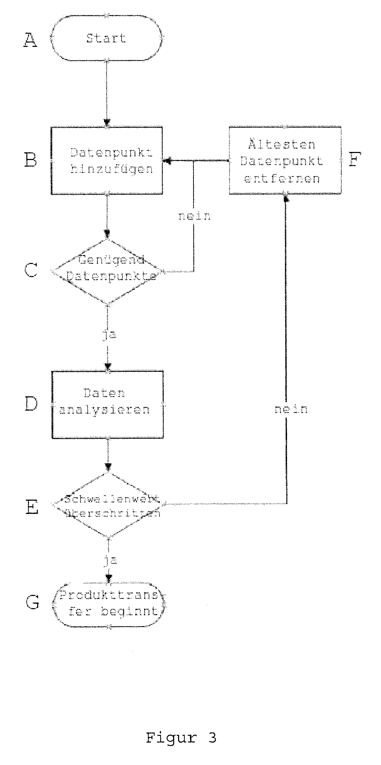

Figur 3 zeigt anhand eines Fliessschemas die Abfolge der einzelnen Schritte zur Ermittlung eines Steigungs- beziehungsweise Schwellenwertes. Nach dem Start eines Rechners gemäss Schritt A werden zunächst Datenpunkte in Abhängigkeit der Zeit ermittelt und in einem Schritt B in einem Speicher des Rechners gespeichert. Sobald eine bekannte Anzahl genügender Datenpunkte in Schritt C ermittelt worden sind, um einen Steigungswert zu ermitteln, erfolgt die Analyse der Datenpunkte gemäss Schritt D.

Der Steigungswert wird in Schritt E mit einem vorgängig festgelegten Schwellenwert verglichen. Ist der Schwellenwert erreicht beziehungsweise bereits überschritten, so wird in Schritt G entschieden, dass der Produkttransfer des Destillats in die Auffangflüssigkeit des Auffanggefässes begonnen hat. Ist der Schwellenwert noch nicht erreicht, so wird der älteste Datenpunkt entfernt und es werden gemäss Schritt F die Schritte B bis E wiederholt.

Typischerweise wird bei einer Probenmessung eine gleitende lineare Regression über jeweils fünf aufeinander folgende Messpunkte vorgenommen. Die Messpunkte sind typischerweise 700 bis 800 ms zueinander beabstandet. Sobald eine Steigung von 0,5 pH-Einheiten auf 5 Messpunkte ermittelt wird, ist der Schwellenwert erreicht. Als Beginn des Produktetransfers gilt der Zeitpunkt des letzten von fünf aufeinander folgenden Messpunkten, für welche der Schwellenwert erreicht oder überschritten ist.

Bei der Blindwertmessung wird auf ähnliche Art und Weise verfahren: Allerdings wird hier eine gleitende lineare Regression über 16 Messpunkte ermittelt. Sobald die pH-Änderung 0,05 Einheiten auf 16 Messpunkte erreicht, gilt der Schwellenwert als erreicht. Als Beginn des Produkttransfers wird der Zeitpunkt des letzten Messpunkts in der Reihe von 16 Messpunkten angenommen, welche das erste Mal den Schwellenwert erreichen oder überschreiten. Es ist auch denkbar, einen Offset vorzusehen.

Bei der Bestimmungsmethode nach Kjeldahl wird eine homogenisierte Probe 2 mit Schwefelsäure und einem Katalysator aufgeschlossen, das entstandene Ammoniak mit Lauge freigesetzt, mittels Wasserdampfdestillation in eine Borsäurevorlage destilliert und anschliessend potentiometrisch oder colorimetrisch titriert. Aufgrund des ermittelten Stickstoffgehaltes kann anhand eines Faktors der Proteingehalt errechnet werden.

Der Aufschluss des Proteins einer Messprobe erfolgt durch Kochen mit einem Überschuss an Schwefelsäure, gegebenenfalls in Anwesenheit von Katalysatoren. Das Protein beziehungsweise die Aminosäuren, ausgedrückt als CHNO, werden hierbei gemäss der folgenden Reaktionsgleichung (i) umgesetzt:

(CHNO) + H₂SO₄ -> CO₂ + SO₂ + H₂O + (NH₄)₂SO₄ + H₂SO₄ (i)

Im Weiteren wird als Lauge Natronlauge (typischerweise 32 % bis 50 %) verwendet, um Ammoniak gemäss der folgenden Reaktionsgleichung (ii) aus dem Probengefäss 1 auszutreiben:

(NH₄)₂SO₄ + 2NaOH -> Na₂SO₄ + 2NH₃ + 2H₂O (ii)

Das freigesetzte Ammoniak wird darauf mittels einer Wasserdampfdestillation in ein Auffanggefäss mit Borsäure als Auffangflüssigkeit überführt. Die Borsäure wird hierbei typischerweise bei einem pH-Wert von 4,65 vorgelegt. Im Auffanggefäss wird beim Beginn des Produkttransfers von Ammoniak als Destillat die Reaktion gemäss Reaktionsgleichung (iii) eingeleitet:

B(OH)₄⁻ + H⁺ + NH₃ -> NH₄⁺ + B(OH)₄⁻

Mit der Umsetzung des Ammoniaks zu Ammonium beginnt der pH-Wert in der Auffangflüssigkeit zu steigen.

Anschliessend erfolgt die Titration beispielsweise mit Salzsäure oder mit Schwefelsäure. Insbesondere kann die Titration mit 0,05 mol/l bis 0,5 mol/l Salzsäure erfolgen. Alternativ ist auch die Titration mit Schwefelsäure denkbar. Die Titration erfolgt auf den Ausgangs-pH-Wert zurück, also bei vorstehendem Beispiel pH 4,65. Es ist aber auch denkbar, den pH der vorgelegten Borsäure nicht einzustellen, sondern zu messen und auf diesen gemessenen Ausgangswert zurückzutitrieren.

Die Titration beginnt zu einem vorbestimmten Zeitpunkt nach der Detektion des Beginns des Produkttransfers. Bei einer Standardtitration erfolgt die Titration sequenziell nach der Beendigung der Destillation. Typischerweise wird als Destillationszeit 180 s nach der Detektion des Produkttransfers eingestellt. Bei einer parallelen so genannten Online-Titration startet die Titration bereits zu einem Zeitpunkt, während dem die Destillation noch nicht beendet ist. Typischerweise wird die Titration 60 s gestartet, nachdem der Produkttransfer detektiert wurde.

Bei der potentiometrischen Titration liefert die Messelektrode ein Signal, welches direkt mit dem pH-Wert verknüpft ist. Aus diesem Signal wird der pH-Wert ermittelt und die Steigung der Messpunkte wie vorstehend beschrieben bestimmt.

Bei einer colorimetrischen Messung wechselt der Indikator während der Reaktion gemäss Reaktionsgleichung (iii) im für Kjeldahl interessanten Bereich zwischen pH 5 bis 4 seine Farbe, was ebenfalls rechnerisch ausgewertet werden kann. Bereits vorher nimmt die Transmission der Indikatorlösung aufgrund des Verdünnungseffekts zu. Daher ist es auch denkbar, Blindwertmessungen vorzunehmen. Bei der Probenmessung werden der Verdünnungseffekt und der Farbwechseleffekt überlagert. Als Indikator wird typischerweise ein Indikator verwendet, der einen Umschlagpunkt in dem für Kjeldahlmessungen relevanten Bereich, also typischerweise um 4,65 pH aufweist. Ausserdem soll die Farbe des Indikators so gewählt werden, dass sie mit geeigneten herkömmlichen Detektoren ermittelt werden kann, also typischerweise bei Transmissionsmessungen im Bereich von 510 oder 623 Nanometern.

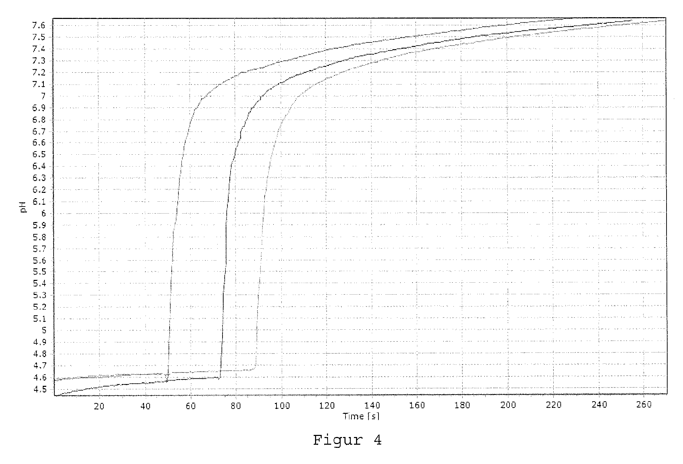

Figur 4 zeigt schematisch die mit einem potentiometrischen Sensor ermittelten pH-Werte in einer Auffanglösung im Verlauf der Zeit. Von links nach rechts betreffen die einzelnen Kurven die Messung bei einem warmen, einem mittelwarmen und einem kalten Gerät. Der Probentransfer bei einem kalten Geräte beginnt bei ca. 90 Sekunden. Der Probentransfer bei einem mittelwarmen Gerät beginnt bei ca. 75 Sekunden und der Probentransfer bei einem warmen Gerät nach ca. 50 Sekunden. In allen drei Fällen ist ein markanter Knickpunkt erkennbar, welcher den Beginn des Probetransfers charakterisiert.

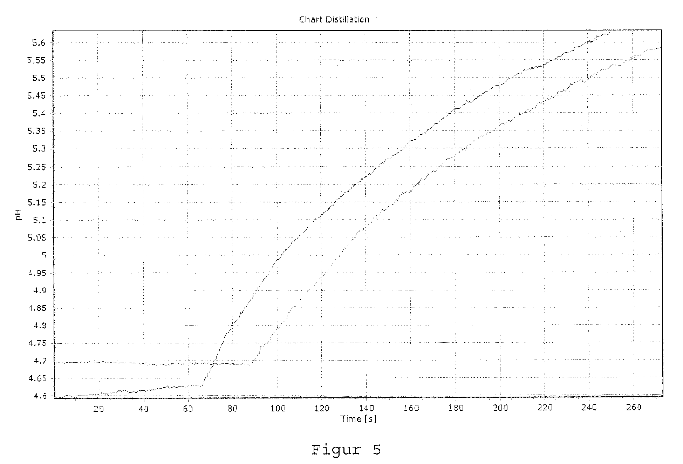

Figur 5 zeigt die Messung einer Blindprobe. Es sind ebenfalls Messungen bei einem kalten (rechts) und einem warmen Gerät gezeigt. Ebenfalls erkennbar ist ein markanter Knickpunkt. Die Steigung der Kurve ist allerdings im Vergleich zur Probenmessung in Figur 4 geringer. Der Schwellenwert, der erreicht werden muss, damit das Vorhandensein des Knickpunkts festgestellt wird, ist also wie vorstehend beschrieben niedriger.

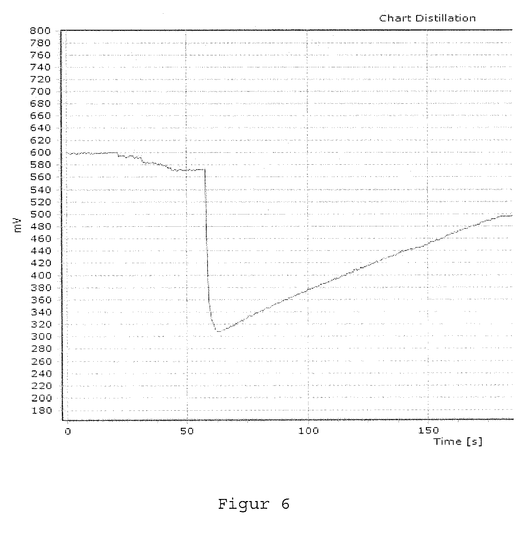

Figur 6 zeigt eine colorimetrisch ermittelte Messkurve bei der Destillation einer Probe. Dargestellt ist der zeitliche Verlauf des Messsignals in mV. Es wird mit einem Sensor die Transmission von Messlicht bei 610nm gemessen. Je höher der Lichteinfall auf den Messsensor ist, d.h. je höher die Transmission durch die Flüssigkeit im Auffanggefäss ist, umso höher ist das vom Sensor erzeugte Messsignal. Ungefähr bei 55 Sekunden ist ein markanter Abfall der Transmission erkennbar. Aufgrund des Beginns des Produkttransfers zu diesem Zeitpunkt ändert sich die Eigenschaft der Auffangflüssigkeit und die Absorption des Messlichts in der Auffangflüssigkeit nimmt zu. Die Transmission nimmt daher ab. Im weiteren Verlauf nimmt die Transmission aufgrund von Verdünnungseffekten und/oder des Farbumschlags aufgrund der pH Änderung wieder zu. Der Abfall charakterisiert den Beginn des Probentransfers. Ähnlich wie vorstehend im Zusammenhang mit potentiometrischen Messungen beschrieben, kann als Zeitpunkt des Beginnes des Probetransfers der Zeitpunkt angenommen werden, in dem eine durch eine bestimmte Anzahl von Messpunkten gelegte Gerade eine Steigung aufweist, deren Betrag grösser ist als ein Schwellenwert.

## Patentansprüche

1. Verfahren zur Destillation, insbesondere Wasserdampfdestillation, wobei der zeitliche Verlauf des pH-Werts einer Auffangflüssigkeit (5) in einem Auffanggefäss (4) ermittelt und gespeichert wird, **dadurch gekennzeichnet, dass** anhand des zeitlichen Verlaufs des pH-Werts der Auffangflüssigkeit (5) im Auffanggefäss (4) der Beginn eines Produkttransfers eines Destillats in die Auffangflüssigkeit (5) ermittelt wird, und dass der Beginn des Produkttransfers des Destillats in die Auffangflüssigkeit (5) des Auffanggefässes (4) rechnerisch bestimmt wird.

2. Verfahren zur Destillation, insbesondere Wasserdampfdestillation, gemäss Anspruch 1, **dadurch gekennzeichnet, dass** der zeitliche Verlauf des pH-Werts der Auffangflüssigkeit (5) im Auffanggefäss (4) grafisch dargestellt wird.

3. Verfahren zur Destillation, insbesondere Wasserdampfdestillation, gemäss Anspruch 3, **dadurch gekennzeichnet, dass** der zeitliche Verlauf des pH-Werts potentiometrisch überwacht wird.

4. Verfahren zur Destillation, insbesondere Wasserdampfdestillation, gemäss einem der Ansprüche 1 bis 4, **dadurch gekennzeichnet, dass** der pH-Wert colorimetrisch in der Auffangflüssigkeit (5) des Auffanggefässes (4) in Abhängigkeit der Zeit ermittelt wird.

5. Verfahren zur Destillation, insbesondere zur Wasserdampfdestillation, gemäss einem der vorherigen Ansprüche, **dadurch gekennzeichnet, dass** die Destillation ausgehend vom berechneten Beginn des Produktetransfers nach einer vordefinierbaren Destillationszeit abgebrochen wird, und das bevorzugt eine Titration nach einem vordefinierten Zeitpunkt nach Beginn des ermittelten Produkttransfers gestartet wird.

6. Destillationsanordnung, insbesondere zur Wasserdampfdestillation, enthaltend ein Probengefäss (1), eine Kondensationsvorrichtung (3) und mindestens ein Auffanggefäss (4) für ein Destillat, wobei im Auffanggefäss (4) eine Messvorrichtung angeordnet ist, mit welcher der zeitliche Verlauf des pH-Werts einer Auffangflüssigkeit eines Auffanggefässes (4) messbar ist und wobei die Vorrichtung Speichermittel aufweist, um den zeitlichen Verlauf zu speichern, **dadurch gekennzeichnet, dass** die Destillationsanordnung Mittel zur Berechnung (7) des Beginns des Produkttransfers ins Auffanggefäss (4) auf der Grundlage des gespeicherten zeitlichen Verlaufs der Eigenschaft aufweist.

7. Destillationsanordnung, insbesondere zur Wasserdampfdestillation, gemäss Anspruch 7, **dadurch gekennzeichnet, dass** die Messvorrichtung eine Elektrode, insbesondere eine pH-Elektrode (6) umfasst.

8. Destillationsanordnung, insbesondere zur Wasserdampfdestillation, gemäss Anspruch 7 oder 8, **dadurch gekennzeichnet, dass** die Destillationsanordnung ein Ausgabegerät (8), insbesondere einen Bildschirm aufweist, auf welchem der zeitliche Verlauf des pH-Werts einer Auffangflüssigkeit (5) in einem Auffanggefäss (4) darstellbar ist.

9. Destillationsanordnung, insbesondere zur Wasserdampfdestillation, gemäss einem der Ansprüche 7 oder 9, **dadurch gekennzeichnet, dass** die Destillationsanordnung Mittel (9) zum Einstellen einer vordefinierbaren Destillationszeit ausgehend vom berechneten Beginn des Produkttransfers.

10. Destillationsanordnung nach einem der Ansprüche 7 bis 10, **dadurch gekennzeichnet, dass** die Destillationsanordnung in wenigstens zwei Betriebsmodi betreibbar ist und insbesondere Mittel zum Umschalten zwischen diesen Betriebsmodi aufweist und dass die Mittel zur Berechnung des Beginns des Produkttransfers zur Berechnung des Beginns in Abhängigkeit des gewählten Betriebsmodus ausgebildet sind.

11. Destillationsanordnung nach Anspruch 10 oder 11 , **dadurch gekennzeichnet, dass** die Destillationsanordnung Mittel zum automatischen Starten einer Titration zu einem vordefinierten Zeitpunkt nach dem berechneten Beginn des Produkttransfers aufweist.

## Claims

1. Process for distillation, in particular for steam distillation, where the chronological profile of the pH of a collector liquid (5) in a collector vessel (4) is determined and stored, **characterized in that** the start of transfer of a distillate product into the collector liquid (5) is determined by reference to the chronological profile of the pH of the collector liquid (5) in the collector vessel (4), and **in that** the start of transfer of the distillate product into the collector liquid (5) of the collector vessel (4) is determined by calculation.

2. Process for distillation, in particular for steam distillation, according to claim 1, **characterized in that** the chronological profile of the pH of the collector liquid (5) in the collector vessel (4) is presented graphically.

3. Process for distillation, in particular for steam distillation, according to claim 3, **characterized in that** the chronological profile of the pH is monitored potentiometrically.

4. Process for distillation, in particular for steam distillation, according to any of claims 1 to 4, **characterized in that** the pH value is determined colorimetrically in the collector liquid (5) of the collector vessel (4) as a function of time.

5. Process for distillation, in particular for steam distillation, according to any of the preceding claims, **characterized in that** the distillation is terminated after a predefineable distillation time starting from the calculated start of product transfer, and **in that** a titration is preferably initiated after a predefined point in time after the start of determined product transfer.

6. Distillation arrangement, in particular for steam distillation, comprising a sample vessel (1), a condensation device (3) and at least one collector vessel (4) for a distillate, where there is, arranged in the collector vessel (4), a measurement device which can measure the chronological profile of the pH of a collector liquid of a collector vessel (4), and where the device has storage means for storing the chronological profile, **characterized in that** the distillation arrangement has means for the calculation (7) of the start of the product transfer into the collector vessel (4) on the basis of the stored chronological profile of the property.

7. Distillation arrangement, in particular for steam distillation, according to claim 7, **characterized in that** the measurement device comprises an electrode, in particular a pH electrode (6).

8. Distillation arrangement, in particular for steam distillation, according to claim 7 or 8, **characterized in that** the distillation arrangement has output equipment (8), in particular a display, which can display the chronological profile of the pH of a collector liquid (5) in a collector vessel (4).

9. Distillation arrangement, in particular for steam distillation, according to either of claims 7 and 9, **characterized in that** the distillation arrangement comprises means (9) for establishing a predefineable distillation time, starting from the calculated start of product transfer.

10. Distillation arrangement according to any of claims 7 to 10, **characterized in that** the distillation arrangement can be operated in at least two modes of operation, and in particular has means for switching between these modes of operation, and **in that** the means for calculating the start of product transfer are designed to calculate the start as a function of the selected mode of operation.

11. Distillation arrangement according to claim 10 or 11, **characterized in that** the distillation arrangement has means for the automatic initiation of a titration at a predefined point in time after the calculated start of product transfer.

## Revendications

1. Procédé de distillation, en particulier de distillation à la vapeur d'eau, dans lequel on détermine et mémorise l'évolution dans le temps du pH d'un liquide récepteur (5) dans un récipient récepteur (4), **caractérisé en ce que**, à l'aide de l'évolution dans le temps du pH du liquide récepteur (5) dans le récipient récepteur (4), on détermine le début d'un transfert de produit d'un distillat dans le liquide récepteur (5), et que l'on détermine par le calcul le début du transfert de produit du distillat dans le liquide récepteur (5) du récipient récepteur (4).

2. Procédé de distillation, en particulier de distillation à la vapeur d'eau, selon la revendication 1, **caractérisé en ce qu'**on représente graphiquement l'évolution dans le temps du pH du liquide de réception (5) dans le récipient récepteur (4).

3. Procédé de distillation, en particulier de distillation à la vapeur d'eau, selon la revendication 3, **caractérisé en ce que** l'évolution dans le temps du pH est surveillée par potentiométrie.

4. Procédé de distillation, en particulier de distillation à la vapeur d'eau, selon l'une des revendications 1 à 4, **caractérisé en ce que** le pH est déterminé par voie colorimétrique en fonction du temps dans le liquide récepteur (5) du récipient récepteur (4).

5. Procédé de distillation, en particulier de distillation à la vapeur d'eau, selon l'une des revendications précédentes, **caractérisé en ce que** la distillation est, à partir du début calculé du transfert de produit, interrompue après un temps de distillation pouvant être prédéfini, et que l'on lance de préférence un titrage après un instant prédéfini après le début du transfert de produit tel que déterminé.

6. Arrangement de distillation, en particulier pour la distillation à la vapeur d'eau, contenant un récipient d'échantillonnage (1), un dispositif de condensation (3) et au moins un récipient récepteur (4) pour un distillat, dans lequel, dans le récipient collecteur (4), un dispositif de mesure est disposé, à l'aide duquel il est possible de mesurer l'évolution dans le temps du pH d'un liquide récepteur dans un récipient récepteur (4), et le dispositif comprenant des moyens de mémorisation, pour mémoriser l'évolution dans le temps, **caractérisé en ce que** l'arrangement de distillation comprend des moyens pour calculer (7) le début du transfert de produit dans le récipient récepteur (4) sur la base de l'évolution temporelle mémorisée de la propriété.

7. Arrangement de distillation, en particulier pour la distillation à la vapeur d'eau, selon la revendication 7, **caractérisé en ce que** le dispositif de mesure comprend une électrode, en particulier une électrode de pH (6).

8. Arrangement de distillation, en particulier pour la distillation à la vapeur d'eau, selon la revendication 7 ou 8, **caractérisé en ce que** l'arrangement de distillation comprend une unité de sortie (8), en particulier un écran, sur lequel peut être représentée l'évolution dans le temps du pH d'un liquide récepteur (5) dans un récipient récepteur (4).

9. Arrangement de distillation, en particulier pour la distillation à la vapeur d'eau, selon l'une des revendications 7 ou 9, **caractérisé en ce que** l'arrangement de distillation comprend des moyens (9) pour ajuster un temps de distillation pouvant être prédéfini, à partir du début calculé du transfert de produit.

10. Arrangement de distillation selon l'une des revendications 7 à 10, **caractérisé en ce que** le dispositif de distillation peut être exploité selon au moins deux modes d'exploitation, et en particulier des moyens pour assurer une commutation entre ces modes d'exploitation, et que les moyens pour le calcul du débit du transfert du produit sont conçus pour calculer le début en fonction du mode d'exploitation choisi.

11. Arrangement de distillation selon la revendication 10 ou 11, **caractérisé en ce que** l'arrangement de distillation comprend des moyens pour lancer automatiquement un titrage à un instant prédéfini après le début calculé du transfert de produit.
